# EUROPEAN PATENT APPLICATION

(11) **EP 4 604 450 A1**
(43) Date of publication of application: **20.08.2025**
(21) Application number: 24157671.9
(22) Date of filing: 14.02.2024
(51) Int. Cl.: H04L 9/40, H04L 45/02

(54) **ROUTER CONFIGURATION**

(71) Applicant: Université catholique de Louvain, 1348 Louvain-la-Neuve (BE)
(72) Inventor: WIRTGEN, Thomas, 6880 Bertrix (BE); RYBOWSKI, Nicolas, 1367 Mont-Saint-André (BE); BONAVENTURE, Olivier, 5030 Gembloux (BE); PELSSER, Cristel, 1348 Louvain-la-Neuve (BE)
(74) Representative: IP HILLS NV

(57) **Abstract**

Example embodiments describe a computer-implemented method for configuring a first router (150) over a secure session between the first router and a network node (120). The method further comprising the following steps: i) determining a configuration description for configuring the first router; ii) creating a certificate comprising the configuration description; iii) providing the certificate to the network node; by the network node, establishing or re-establishing the secure session the first router using the certificate; and iv) by the first router, extracting the configuration description from the certificate, and configuring the first router according to the configuration description.

## Description

### Technical Field

Various example embodiments relate the configuration of router over a routing session between the first router and a networking node.

### Background

Routers connect communication networks with each other to form a larger network such as the Internet. By forwarding networking packets, routers define the path that these packets will follow from their source to their destination. To guarantee optimal routing under changing network conditions, routers establish routing sessions with neighbouring routers to exchange routing and reachability information. Different routing protocols exist that define the routing information and how the routing sessions can be established. One example of a routing protocol is the Border Gateway Protocol, BGP, that can be used by routers belonging to the same autonomous system, AS, or by routers belonging to different autonomous systems, the first being referred to as External Border Gateway Protocol, eBGP, and the latter as Internal Border Gateway Protocol, iBGP.

A general concern of routing sessions is security. BGP for example foresees the use of hash based message authentication, referred to as TCP-MD5, or the use of the TCP Authentication Option, TCP-AO. Router vendors may also support the establishing of VPN tunnels between routers to secure routing sessions. Another security measure is to perform packet filtering in a router to block potentially spoofed packets targeting the router.

### Summary

Although existing solutions offer increased security to some degree, they still have several drawbacks. For example, routers often need manual configuration to establish the routing session, especially for external routing sessions between different autonomous systems. Such manual configuration is not only a security risk but also hinders fast changes in router configurations.

The scope of protection sought for various embodiments of the invention is set out by the independent claims.

The embodiments and features described in this specification that do not fall within the scope of the independent claims, if any, are to be interpreted as examples useful for understanding various embodiments of the invention.

It is an object of the present disclosure to alleviate the above-identified shortcomings and to provide, amongst others, an improved solution for configuring a router over a routing session.

This object is achieved, according to a first example aspect, by a computer-implemented method for configuring a first router over a secure session between the first router and a network node. The method further comprises the following steps:
- determining a configuration description for configuring the first router;
- creating a certificate comprising the configuration description;
- providing the certificate to the network node;
- by the network node, establishing or re-establishing the secure session with the first router using the certificate;
- by the first router, extracting the configuration description from the certificate, and configuring the first router according to the configuration description.

In other words, the configuration of the first router is supplied by the network node to the first router over the secure session. This may be done when establishing the secure session or when re-establishing the secure session. Re-establishment may be done when the secure session was already existing but the configuration of the first router needed updating. By definition, the network node is a trusted network node to the first router because the secure session is established using the certificate. This also implies that the session is only established upon successful validation of the certificate. Also by definition, by including the configuration of the first router within the certificate, the first router can also trust the configuration description.

As the configuration description is provided as part of the secure session, there is no need to provide a separate interface for configuring the first router, e.g. the first router does not need manual configuration. Further, security is intrinsically guaranteed by the certificate, i.e. tampering with the configuration description can be detected by the first router. Therefore, it is ensured that the configuration description is the one that was included by the certificate issuer.. This is not the case when the first router is configured through other means.

According to further example embodiment, the secure session is a secure routing session.

According to example embodiments, the certificate comprises a signature and a signed portion. Upon creation of the certificate, a descriptive portion including at least the configuration description is then signed together with a key, thereby obtaining the signed portion. The key is associated to the network node. When validating the certificate by the first router, the signed portion can be validated by the signature, and the identity of the network node can be verified by the key.

The configuration description may relate to any function of the first router that is configurable. According to example embodiments, the configuration description contains control plane settings for the first router and/or data plane settings for the first router, i.e. configuration of the control plane and data plane of the first router.

According to example embodiments, the creating the certificate comprises encrypting at least a part of the configuration description and the extracting the configuration description comprises decrypting at least the part of the configuration description.

This way, a part or the complete configuration description may be hidden from the network node itself. This may be advantageous if the configuration description contains information that should only be visible to the first router.

According to example embodiments, the creating the certificate comprises authenticating the configuration description and the extracting the configuration description comprises validating its authenticity. Next to security that is implicit to the use of certificates, further authentication mechanisms can thus be applied.

According to example embodiments, the determining, creating and providing is performed by a certificate authority trusted by the first router.

According to example embodiments, the method further comprises:
- determining a second configuration description for configuring the network node;
- including the second configuration description in a second certificate;
- providing the second certificate to the first router;
- upon the establishing or re-establishing the secure session, providing the second certificate to the network node; and
- by the network node, extracting the second configuration description from the second certificate, and configuring the network node according to the second configuration description.

In other words, the mechanism for configuring the first router can also be used to configure the network node in return. This allows mutual configuration of the nodes involved in the routing session. By the use of the certificates, the configuration is still fixed when the certificates are created thereby assuring a single point of control even when configuring both the first router and network node. Alternatively, the first and second configuration description may be included in the first certificate wherein the network node retrieves its configuration from the first certificate.

According to example embodiments, the first router belongs to a first autonomous system, first AS, and the network node belongs to a second autonomous system, second AS. The secure session may then be an external routing session between the first and second AS, or another type of secure session such as a QUIC or TLS session.

In other words, router configuration may be done among ASs while maintaining control over the configuration and, hence, maintaining security. As long as the certificate is issued by a party that is trusted by the first router, any selected network device can configure the first router. As the certificate is also used to (re-establish the routing session, no further security risks are introduced for external routing sessions.

According to example embodiments, the first router provides a remote triggered black hole, RTBH, service; the method further comprises:
- by the network node, receiving a notification of an attack against target nodes by packets under control of the first router;
- by the network node, requesting the first router, over the secure session, to block traffic to the target nodes; and
- by the first router, triggering the blocking of the traffic.

By the certificate, the first router is sure that the block request originates from the network node. As a result, blocking requests can be issued across different autonomous systems and directly over a routing session. There is thus no need for further protocols or separate private network tunnels to do the actual configuration.

According to example embodiments, the network node is a second router. Therefore, one router can configure the first router over a routing session in a secure manner.

According to example embodiments, the first AS is an Internet provider AS and the second AS is a customer AS. The first and second routers are edge routers connecting the customer AS to the Internet provider AS, and the configuration description is determined by the Internet provider upon request of the customer.

This way, a customer can initiate the reconfiguration of the provider's edge router, as long as it retrieves the certificate from the provider. Therefore, the provider must not do any manual intervention on the first router, but only provide the certificate to the customer. As edge routers between ASs typically have ongoing routing sessions, the customer can trigger the reconfiguration by restarting the secure session with the new certificate. Again, beyond the certificate based routing session, no further direct interaction is needed with the operator's edge router.

According to other example embodiments, the routing session is a border gateway protocol, BGP, routing session. According to other example embodiments, the routing session is conducted over a secure transport protocol. According to other example embodiments, the routing session is established as a TLS or QUIC session, or as a private network tunnel that carries the certificate.

According to a second example aspect, a router is disclosed that is configured to:
- upon request of a network node, establish or re-establish a secure session with the network node using a certificate received from the network node; the certificate further comprising a configuration description for configuring the router;
- extract a configuration description from the certificate, and configure the router according to the configuration description.

According to a third example aspect, a system is disclosed comprising the router according to the second example aspect, a network node, and a certificate issuing entity trusted by the router; wherein the certificate issuing entity is configured to:
- obtain the configuration description for configuring the router;
- create the certificate comprising the configuration description;
- provide the certificate to the network node;
   and wherein the network node is configured to:
- establish or re-establish the secure session with the first router using the certificate.

According to a fourth example aspect, a computer program product is disclosed comprising computer-executable instructions for performing the steps according to the first example aspect.

According to a fifth example aspect, a computer-readable medium is disclosed having stored thereon the computer program according to the fourth example aspect.

### Brief Description of the Drawings

Some example embodiments will now be described with reference to the accompanying drawings.
Fig. 1 shows an example of a computer network used for illustrating example aspects of the present invention;
Fig. 2 shows steps performed for configuring a router according to example embodiments;
Fig. 3 illustrates a network topology providing an anycast service according to an example embodiment;
Fig. 4 illustrates a network topology wherein a network node triggers a remote triggered black hole service according to an example embodiment;
Fig. 5 illustrates a network topology wherein a router in a customer autonomous system performs a multi-homed stub configuration; and
Fig. 6 shows an example embodiment of a suitable computing system 600 for performing one or several steps in embodiments of the invention.

### Detailed Description of Embodiment(s)

The present disclosure relates to routing within Internet Protocol, IP, based interconnected computer networks such as for example the Internet. A computer network, IP network, or shortly network contains network nodes, or shortly nodes, that are capable of exchanging network packets with other network nodes that are located within the same network or in another computer network. A node can be addressed by an IP address or network address. A network node may be a communication endpoint that initiates the transmission of a network packet or is the intended receiver of the network packet. A network node may also be a redistribution point that forwards packets to other network nodes. A router is a redistribution point that connects networks and forwards packets from one network to another.

A collection of connected network addresses, called routing prefixes, may be under the control of one or more network operators. Such collection of routing prefixes is referred to as an autonomous system, AS, because it is under the control of a single administrative entity. An AS thereby presents a common and defined routing policy to other computer networks and the Internet. An AS may further be defined by a unique number, the autonomous system number, ASN. An AS may further be categorized as a stub AS or a transit AS. A stub AS, or stub, is an AS that does not provide transit services, i.e. it only forwards packets towards its own routing prefixes. A single-homed stub is a stub that is connected to one single other AS. A multi-homed stub is a stub that is connected to at least two different ASs. ASs may further be interconnected with each other at a physical location for the exchange of packets destined for the respective ASs. Such a location is also referred to as an Internet Exchange Point, IXP. When a router in one AS exchanges information with another AS then the router is also referred to as an edge router or border router. When routers in neighbouring ASs or within the same AS exchange information they may be referred to as neighbouring routers or peers.

By the exchanged information, the routers can take routing decisions, i.e. select a path or route for packets exchanged between nodes. Routers exchange routing information over a communication session, further referred to as a routing session. When a routing session is between routers belonging to different ASs, then the routing session may be referred to as an external routing session. Similarly, when a routing session is between routers belonging to the same AS, then the routing session may be referred to as an internal routing session. Routing protocols define how routing sessions are established, maintained and how routing information can be exchanged.

One example of a routing protocol is the Border Gateway Protocol, BGP, defining how routers can exchange routing and reachability information among autonomous systems, AS, on the Internet. The latest version of BGP, BGP-4, is described in RFC 4271, January 2006. When using BGP, a routing session between peers may be established by manual configuration among routers over a TCP transport layer session. When BGP is used between routers in the same AS it is referred to as Internal BGP, iBGP. When BGP is used between routers in different autonomous systems, it is referred to as External BGP, eBGP. BGP routing sessions can be secured by authenticating the TCP packets by a hash based on a shared password, e.g. by the use of TCP-MD5 or TCP-AO as defined in RFC 5925. Alternatively, routing sessions may run over a virtual private network, VPN, tunnel. For example, eBGP supports peering inside a VPN tunnel, allowing two remote sites to exchange routing information in a secure and isolated manner. BGP routing sessions may further apply best practices as defined by BCP 38 (RFC2827) or RFC7454 to prevent spoofed packets that would target these routers or other equipment in the network.

Another example of a routing protocol is the Open Shortest Path First, OSPF, routing protocol for Internet Protocol, IP, networks. OSPF operates within a single AS and is therefore an interior gateway protocols, IGP. OSPF defines how to distribute the network maps that are used by the routers to compute the shortest path to reach each other within the same AS.

The present disclosure relates to the configuration of routers. Router configuration may relate to control plane configuration, i.e. the configuration of the control plane of the router. The control plane is responsible for making decisions about routing paths and updating the routing table. Control plane configuration may define how the router participates in routing protocols and how it processes information related to the network. Control plane configuration may include: configuration and activation of specific routing protocol, e.g. OSPF, BGP, RIP; fine-tuning of routing protocol parameters, such as setting administrative distances, metric weights, Maximum-Prefixes to control how many prefixes can be received from a peer, and timers; configuration of static routes; configuring and tuning of protocols to exchange routing information and build the routing table; configuration of routing policies to influence route selection based on attributes like prefix length, next-hop IP, or AS-path in BGP; modifying the attributes contained in the BGP route, such as changing the MED value, adding BGP communities, prepending AS in the AS-Path; route filtering and redistribution configurations to control the propagation of routing information; configuration of route summarization and aggregation to optimize the size of the forwarding table; the redistribution of routes between different routing domains or protocols; parameters to control the behaviour of route redistribution; configure the policies to control the rate of control plane traffic to protect against DoS, Denial of Service, attacks; configure access control lists, ACLs, to filter management and control plane traffic; configuration of further management interfaces, e.g., SNMP, Telnet, SSH, allowing remote monitoring and management of the router; configuration of logging settings to record events and errors, configure time synchronization protocols like NTP, Network Time Protocol, to ensure accurate timekeeping on the router; configuration of protocols like HSRP, Hot Standby Router Protocol, or VRRP, Virtual Router Redundancy Protocol, for router redundancy; configuring VPN specific attributes such as Route Distinguishers (RD), Route Targets (RT), Virtual routing and forwarding tables (VRFs), and data plane tunnel policies.

Router configuration may also relate to data plane configuration, i.e. the configuration of the data plane of the router. The data plane fulfils the main role of the router, i.e. the forwarding of packets based on decisions made by the control plane. Data plane configuration may include: configuration of the forwarding table with information derived from the routing table; definition of ACLs to control the flow of traffic based on source and destination IP addresses, port numbers, and other criteria; application of ACLs to filter or permit packets as they pass through the router; configuration of Quality of Service, QoS, policies to prioritize certain types of traffic over others; configuration of bandwidth limits, traffic shaping, and prioritization based on protocols or network addresses; configuration of packet-switching mechanisms to determine how packets are forwarded through the router; adjustment of buffer sizes and tuning of packet-switching performance; configuration of tunnelling protocols for creating virtual network connections across networks; configuration of encapsulation protocols for packet transmission, such as PPP, GRE, IPSec, MPLS, Segment Routing, VxLAN; configuration of security features like IPsec for encrypted communication; configuration of Unicast Reverse Path Forwarding, uRPF, for ingress traffic filtering; configuration of physical and logical interfaces; parameters such as bandwidth, Maximum Transmission Unit, MTU, and duplex mode; configuration of load balancing mechanisms to distribute traffic across multiple paths; adjustment of load-balancing algorithms; configuration of network address translation, NAT, to translate private IP addresses to public IP addresses, allowing devices on a private network to access the internet.

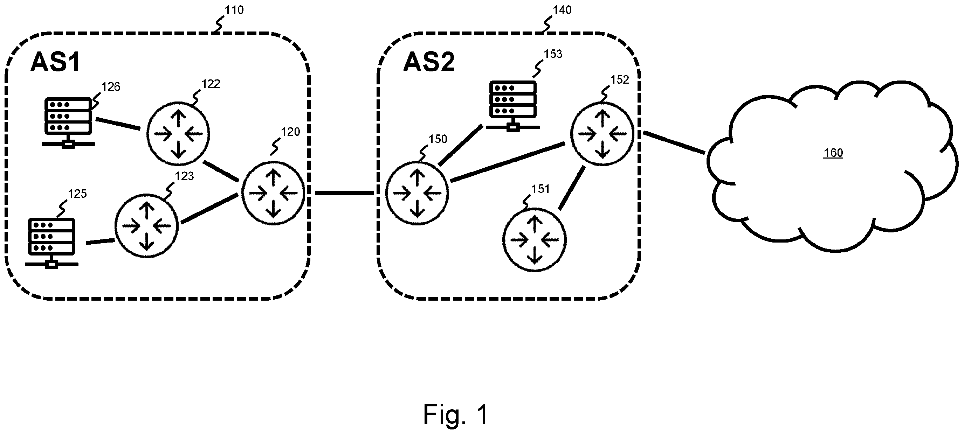

Fig. 1 illustrates two autonomous systems AS1 110 and AS2 140 that are further part of an interconnected network 160. Fig. 1 will be used to illustrate example embodiments as described further below. AS1 110 comprises an edge router 120 connected to two internal routers 122, 123. AS1 110 further comprises network end nodes 125 and 126 respectively connected to routers 123 and 122. Similarly, AS2 140 comprises edge router 150 connected to edge router 120 of AS1 110. Edge routers 120 and 150 are peers. AS2 140 further comprises another edge router 152 connecting AS2 with interconnected network 160. AS2 140 further comprises an internal router 151 and network end node 153. AS2 140 is a transit AS because it connects AS1 110 with network 160. AS1 110 is a stub AS because packets arriving at edge router 120 will only be routed to routing prefixes of AS1 110. AS1 is a single-home stub AS because it is a stub AS that connects only to AS2 140.

The topology depicted in Fig. 1 may be used in the context of a network operator or Internet Service Provider, ISP. AS2 140 is then the operator's access network while AS1 110 may be managed by a customer of the operator. AS1 is provided access to the Internet 160 through the operator's AS2. The operator then controls the routing prefixes of AS1 110. The operator will typically have multiple customers having their own AS that are connected to AS2 140, for example all connecting to edge router 150.

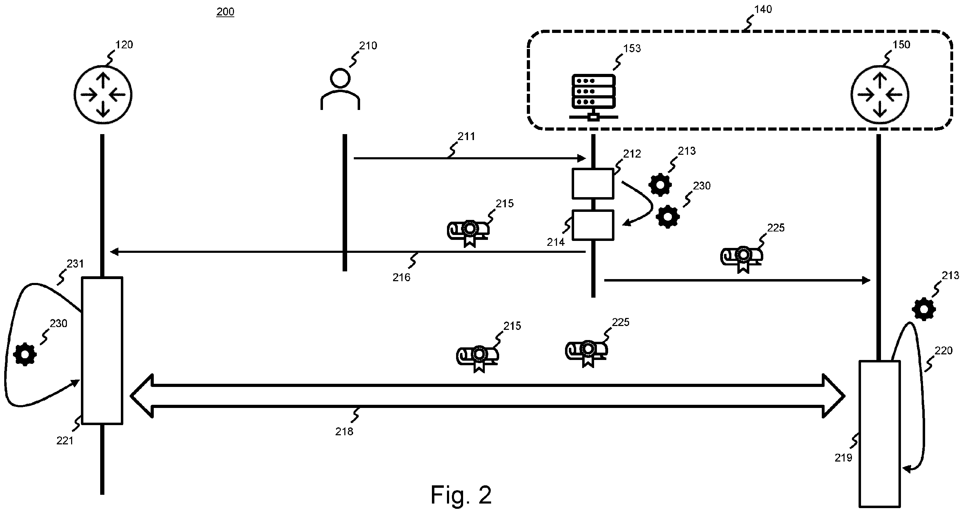

Fig. 2 shows a sequence diagram illustrating a method 200 according to example embodiments. By the method 200 a network node 120 can configure a first router 150 during the establishing or re-establishing of a secured session 218 between the network node 120 and first router 150. Referring back to Fig. 1, as an example, the first router may be an edge router 150 in AS2 140 and the networking node may be the edge router 120 in AS1 110. The established or re-established secure session 218 is then a secure routing session between edge routers 120 and 150. By the method 200, edge router 150 can be configured by edge router 120. According to method 200, the configuration is initiated by a user 210 sending a request 211 to network node 153. Network node 153 is configured to authenticate the user 210, for example as the network manager of AS1, and to accept such a request 211 from an authenticated user. Network node 153 may be located within the same AS as first router 150 as depicted in Fig. 1 and Fig. 2. Alternatively, network node 153 may belong to another entity or AS as router 150.

Upon receiving the request 211 and authentication of user 210, network node 153 verifies the request 211. Request 211 contains a request to reconfigure first router 150 using the secure session 218 between network node 120 and first router 150. The reconfiguration may relate to control plane settings for the first router and/or to data plane settings for the first router. Upon validating the request 211, network node 153 determines a configuration description 213. This description contains a description of the settings that are to applied by first router 150 upon reception of the configuration description. The configuration description may include control and/or data plane settings for the router 150. The configuration description may contain settings in the form of parameters that are to be applied within the router 150. The configuration description may also include instructions that are to be performed by the router 150 for reconfiguring it. These instructions may be in the form of human readable instructions, e.g., in the form of a script, or in a binary format such as executable code. The configuration description may be formatted according to protocol configuration standards and/or data modelling standards such as for example Yang, Netconf, SNMP, and gRPC Remote Procedure Calls.

In a next step 214, the configuration description is included in a certificate 215. The certificate 215 is an electronic document containing information including the configuration description, a key associated to the network node 120, and a signature. The signature is obtained by signing of at least the key and configuration description thereby obtaining a signed portion and signature for the certificate. Certificate 215 may also comprise information identifying the network node 153 that issued the certificate 215. Certificate 215 may for example be in the format of a public key certificate wherein the network node 120 is identified by the key as a public key and the network node 153 is identified as certificate authority, CA, because it is the issuer of the certificate. Certificate 215 may be in the X.509 public key certificate format as defined in RFC 5280.

When the certificate 215 is created, it is provided 216 to network node 120. The certificate may be provided directly to network node 120 or indirectly, e.g. by providing it first to user 210 or any other party. Upon receiving the certificate, network node 120 establishes 221 or re-establishes 221 the routing session 218 using the certificate 215, i.e. the certificate 215 is provided to first router 150 to authenticate the network node 120. The routing session 218 will only be established or re-established by the first router 150 upon successful validation of the certificate 215. To this end, it verifies that the content of the certificate including the configuration description is issued by the trusted issuer, i.e. network node 153. To this end, the routing session is a secured routing session. In case the issuer of the certificate, i.e., node 153, relies on higher authorities, then the certificate chain of trust is verified by the router 150 to trust the issued certificate.

Further, when first router 150 receives the certificate 215, it also retrieves the included configuration description 213 and configures itself according to this configuration description. The configuration may also include instructions that are to be executed by the first router 150

According to example embodiments, network node 153 may also determine a second configuration description 230 describing how the network node 120 is to be configured upon establishing or re-establishing the routing session. This second configuration description may be included by network node 153 in a second certificate 225. The second certificate then contains a key identifying the first router 150 and is signed with a signature such that a network node can verify the validity of this second certificate. The second certificate 225 may thus be formatted in a similar way as the first certificate 215. This second certificate is then provided to the first router 150 by the network node 153. Upon the establishing or re-establishing of the routing session 218, the first router 150 shares this second certificate with the network node 120. Network node 120 then verifies the validity of the certificate and extracts 231 the second configuration description 230 from the certificate. It then configures itself according to this second configuration description 230.

According to example embodiments, the established routing session 218 may be used to exchange routing information according to a routing protocol, for example according to the BGP routing protocol. According to an example embodiment, the routing session may be transported over a transport layer protocol such as for example TCP, TLS, UDP, DTLS, IPSec, SCTP or QUIC. The routing session may further be secured according to a security protocol. The first and/or second certificate may be used to secure the routing session. The Transport Layer Security, TLS, cryptographic protocol may for example be used for the security protocol and the X.509 format for the certificates. The routing session may also be secured by using the IPSEC security protocol, either in tunnel mode or transport mode.

According to example embodiments, the configuration description may be completely or partially encrypted when creating the certificate under step 214. The configuration description or part of it is then decrypted by first router 150 during the extracting step 220. Part of the configuration description may be encrypted and another part may remain in plain text. The part that is not encrypted may contain information that is useful for network node 120 while the encrypted part may contain information that should only be visible to router 150.

The method 200 may be applied for the use case of configuring an external routing session between a customer AS and a provider AS. Referring to Fig. 1, AS1 110 may be the customer AS 110 and AS2 140 may be the provider AS 140 wherein the customer AS 110 is provided access to the Internet 160 by the provider AS 140. In the art, configuration of peering routers 120 and 150 is performed manually. For example, when using the BGP protocol, to activate the eBGP session, the routers must be configured with the AS number of the peer, its network address, and the export and import filters. Such configuration of an eBGP session can be complex and a small error in one of the commands or its parameters can result in a so-called fat-finger error. Some of these errors may last long and have an impact on the global Internet. When applying the method 200 to this use case, the provider generates the certificate 215 on request of the customer, for example through a web portal. In the configuration description, the operator can add an import filter that will be applied to router 150 when establishing the routing session. This import filter lists all the prefixes that the customer is authorized to announce, i.e. its own prefixes or the prefixes of its own customers. The certificate is then issued by the provider AS and may be signed by the certification authority of the provider AS.

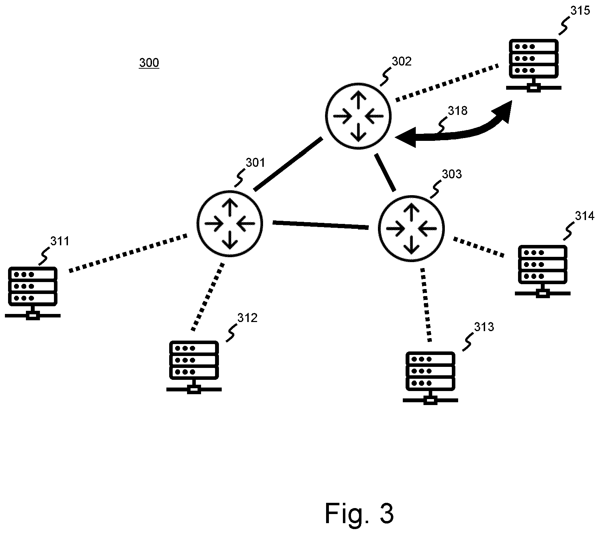

Fig. 3, 4 and 5 show further use cases that apply the method 200. Fig. 3 illustrates a network topology 300 in which the method 200 is applied in the context of a so-called anycast service. An anycast service allows loading of a service that is to be distributed over several network nodes in a network. One example use case of an anycast service is the deployment of Domain Name System, DNS, servers or DNS resolvers. By the anycast service, each network node uses the same IP network address.

Network 300 comprises three routers 301, 302, and 303 connected with each other, i.e. providing packet forwarding to each other according to configured routing rules within network 300. Router 303 connects server nodes 313 and 314 to network 300, and router 301 connects server nodes 311 and 312 to network 300. Server nodes 311 to 314 and routers 301 to 303 are configured to provide an anycast service, i.e. network nodes addressing an IP address related to the anycast service may be directed to different physical server nodes. At a certain point in time, for example due to an increase in network traffic, server node 315 needs to be added to the anycast service. Advantageously, this addition should be performed in a fully automated way. In state of the art systems this is done by manually configuring and running a script on the router 302 such that the router is aware that server 315 is now part of the anycast service. According to the method 200, the addition is done by including the configuration of the router 302 in the certificate 215. The certificate is then provided to server node 315 according to step 216 of Fig. 2. Server node 315 then establishes a secure session 318 with the closest router 302 using the certificate. Upon successful validation of the certificate, the router 302 applies the configuration as described in the included configuration description thereby adding the server node 315 to the anycast service.

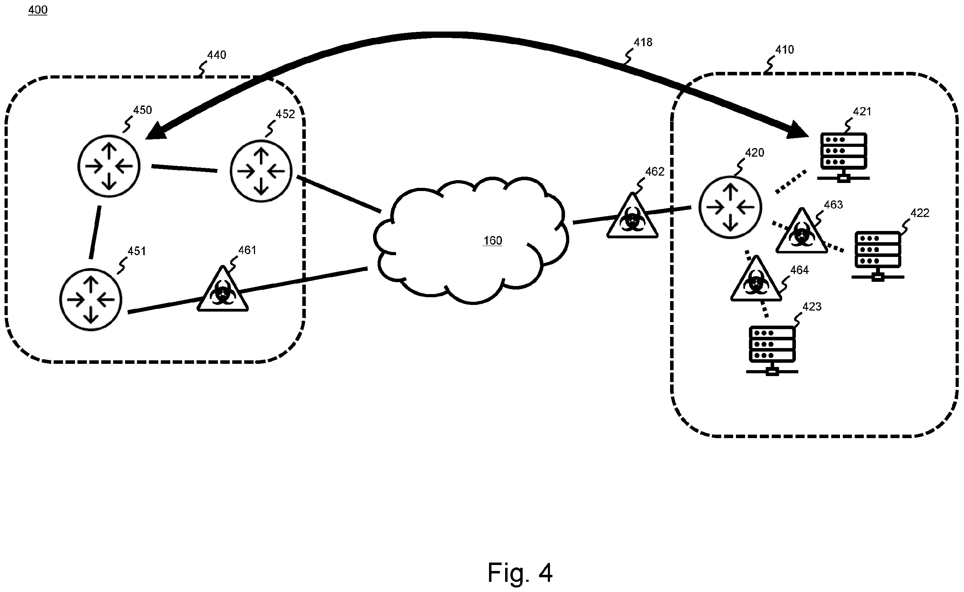

Fig. 4 illustrates a network topology 400 in which the method 200 is applied in the context of a so-called remote triggered black hole, RTBH, service or filtering. A RTBH service allows configuring so-called null routes or black hole routes in one or more routers. A null route is a route that goes nowhere such that matching network packets are dropped by the router rather than forwarded. By RTBH filtering, network packets are dropped at the routing level. By RTBH filtering undesirable traffic may be dropped before reaching a target network node or even the AS that the target node belongs to. RTBH filtering may for example be provided as a service by an Internet Exchange Point, IXP, to its members or customers to act against attacks, e.g. denial-of-service attacks.

Network topology 400 comprises a first AS 440 containing routers 450, 451, and 452, and a second AS 410 containing a router 420 and network node 421. As 440 and 410 are interconnected, for example over the Internet 160. At a certain point in time, nodes 422 and 423 are the target of a network attack, i.e. these nodes receive undesired network packets 461-464 aiming at disturbing the intended functioning of nodes 422, 423. As such, these nodes can be considered as target nodes of a network attack. The network packets 461-464 forming the attack are under control of AS 440 and thus under the control of router 450. Upon detecting the attack, node 421 requests router 450 to block the traffic of these packets over secure session 418 wherein node 421 acts as node 120, and router 450 acts as first router 150 according to the method 200 of Fig. 2. As the secure session 418 is validated by the use of the certificate, router 450 can be assured of the authenticity of the request. Upon receiving the request, router 450 triggers the blocking of the harmful network traffic. This triggering may include configuring router 450, and/or configuring other routers 451, 452 within the AS 440. This configuring may be done according to steps of method 200 wherein router 450 now acts as the node 120 and the other routers 451, 452 act as the first router 150.

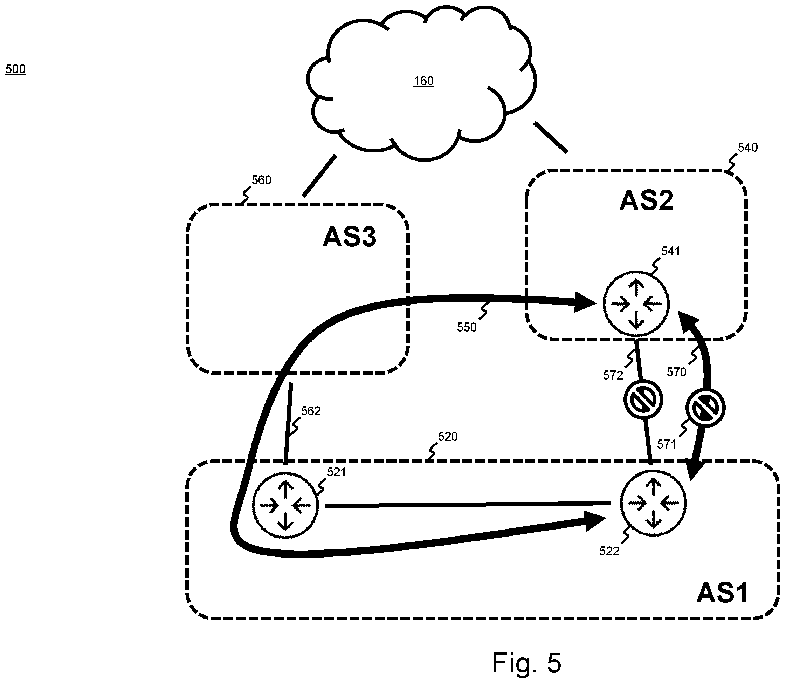

Fig. 5 illustrates a network topology 500 in which the method 200 is applied in the context of multi-homed stub configuration. Topology 500 contains a first multi-homed stub AS1 520 that is connected to at least two different ASs, AS2 540 and AS3 560. ASs 540 and 560 provide AS1 520 redundant connectivity to the Internet 160. AS1 520 has a connection 562 with AS3 560 over edge router 521, and a connection 572 with AS2 540 by edge router 522. Topology 500 is generally referred to as a multi-homed network. A first type of multi-homed network as known in the art uses a provider independent, PI, prefix. In this first type, the multi-homed stub AS1 advertises the same prefix to all its providers, i.e. to both AS2 and AS3 in the example of Fig. 5. A second type of multi-homed network as known in the art uses Provider Aggregatable, PA, prefixes, i.e. the multi-homed stub AS1 receives a separated PA prefix for each provider it is connected to, i.e. for AS2 and AS3. In case one of the connections fails, e.g. connection 572, AS3 560 will send withdraw messages, e.g. BGP withdraw messages, and traffic will be redirected over the other connections. A drawback of such withdrawal is that it generates a lot of router messages throughout the Internet 160. This drawback may be overcome by application of the method 200 within this context as described below.

Before the connection 572 is lost, a routing session 570 was established and active between routers 522 and 541. Routing session 570 may have been established according to the steps of method 200. At a certain moment, connection 572 fails and, thus, also the routing session 570 between edge routers 541 and 522. When this occurs, a new routing session 550 is established between the edge routers 541 and 522 along the other connection 562. Setting up this new routing session 550 may also be done according to the method 200 wherein router 522 performs the steps of network node 120, router 541 performs the steps of network node 150, and the new routing session 550 corresponds to routing session 218. The configuration description then contains: i) information on how to setup a secure data-plane tunnel between routers 541 and 522; and ii) a request to reconfigure router 541 to forward traffic arriving at router 541 and destined for AS1 over the secured data-plane tunnel. The information may thus contain a directive that allows creating the tunnel, as well as the information needed to authorise the connection only through the router that has changed the interface. This way, the provider's router 541 only authorises routings sessions for which it is certain of the source, i.e. router 522, and, therefore, does not become a node that listens to any source.

Alternatively, the data-plane tunnel is established beforehand. In this case, routers 541 and 522 will exchange certificates when setting up routing session 570 containing the configuration for the data-plane tunnel, i.e. the first configuration description within the certificate for router 541 will contain the configuration of router 541 as endpoint of the tunnel, and the second configuration description within the certificate for router 522 will contain the configuration of the router 522 as the other endpoint of the tunnel. Then, when connection 572 fails, the routing session 550 is established. The certificates that are exchanged during the establishment of the routing session 550 contains the configuration to request data packets to be forwarded through to the pre-established tunnel, i.e., the first configuration description within the certificate for router 541 will contain the information to forward data-plane traffic through the pre-established tunnel on the router 541 endpoint, and the second configuration description within the certificate for router 522 will contain the information to forward data-plane traffic through the pre-established tunnel on the router 522 endpoint.

When using QUIC for the routing session 570 between routers 522 and 541, then the establishing of the new routing session 550 may be done by a connection migration after which the transport of the routing session is reconfigured. When using TLS for the routing session 550, then the router 522 can perform a graceful restart of the routing session and thereby establish the new connection 550 on another interface of router 541.

As a result, announcements over the Internet 160 are avoided because the redirection over the data-plane tunnel is transparent. Further, if using PA prefixes, the PA prefix under control of AS2 540 will still be reachable through the data-plane tunnel.

The principle of router configuration over a secured session as depicted in Fig. 2 may also be applied in the context of eBGP open-peerings, more specifically in the context of shared-cost routing sessions wherein network operators have open peering policies. Such open peering policy may occur in ASs that are present at Internet exchange Points, IXPs, wherein the AS accepts to peer with any other AS. Usually, the network operators require the peer to respect some requirements before configuring the actual routing session. For example, a network operator may require that the peer does not modify the Next-Hop attribute, to only send traffic destined to the AS, to not point a default route to the AS or to not leak the route to other ASs. According to the current state of the art, the Open Peering, OP, AS cannot verify these requirements when establishing the routing session. The possibility to verify is to monitor the traffic itself after the routing session is established. According to an example embodiment, the AS that provides the open-peering may provide an interface through which peers may request an open-peering routing session. This interface may be provided by the network node 153 that interacts with the user 210 that fills in certain fields, e.g. the prefixes that the peer 120 wishes to advertise, as well as other configuration options for establishing the peering. Upon validation of the request 211, the network node 153 generates the certificate 215, e.g., an X.509 certificate, that authorizes the peer 120 to establish peering with the Open Peer, OP, AS, i.e. with OP router 150 within OP AS 140. The certificate may contain two router related parts. The first part is the configuration that the peer router 120 must apply to establish the routing session with the OP AS 140. The second part contains the configuration of the OP router 150 that will be set in once the routing session is established. Preferable, the second part is encrypted because it may contain sensitive data about the OP's internal AS network 140. The content of both encrypted and unencrypted parts may contain various information such as the IP prefixes that will be advertised by the peer, the export filter, the maximum number of prefixes to be advertised, etc. Upon, or before establishing the routing session, the peer router 120 reads and applies the required configuration. Then, the peer 120 establishes the session by presenting its certificate to the open peer router 150. Upon reception, the open peer router reads and decrypts the second part, applies the configuration and accepts the routing session.

The principle of router configuration over a secured session as depicted in Fig. 2 may also be applied in the context of so-called BGP communities wherein a provider offers improved traffic engineering features to its client ASs. According to the current state of the art, customers rely on BGP communities for requesting such traffic engineering features. BGP communities allow defining opaque BGP attributes that are only understood by the AS that defined the semantics. They may be used for fulfilling various functions such as traffic engineering, and limiting the propagation of routes through certain regions in the world. Sometimes, operators publicly disclose how to use these BGP communities to influence routing. However, BGP communities may also be used for malicious purposes, e.g. to trigger unexpected blackholing or perform Distributed Denial-of-Service, DDoS, attacks. This disadvantage may be overcome by the use of certificates as already described with reference to Fig. 2. According to this embodiment, AS 140 is a provider's AS where node 153 provides a web service over which authenticated users 210 may request specific traffic engineering configurations for some of the user's prefixes. For example. The user 210 may want to set different local-pref values for different prefixes, or to restrict the distribution of some prefixes to parts of the provider network or its peers. Network node 153 then verifies the user requests 211. Upon successful validation, the requested actions are incorporated into the certificate 215 as part of the configuration description. The certificate is then used by the client router 120 to configure the network provider's router 150. This method is more secure than the current BGP communities which are not authenticated. The commands that are placed in the certificates are always provided under control of the network operator, i.e. by the node 153, and not directly by the customer, i.e. user 210. Commands that incorporated within the configuration description may also be manually created, for example by a network engineer.

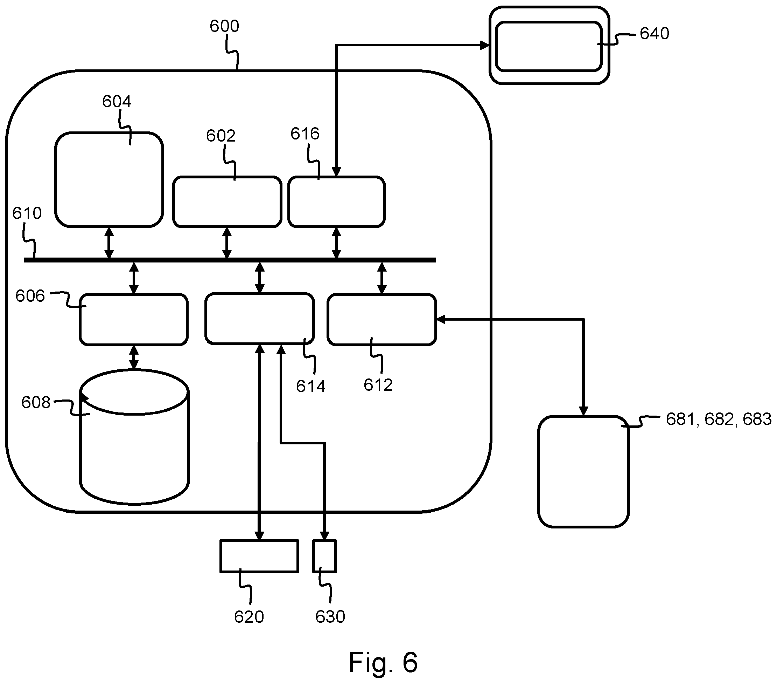

Fig. 6 shows a suitable computing system 600 suitable for performing steps performed by network nodes according to described example embodiments. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems, for example with other computing devices 681, 682, 683. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, -ROM disk, solid state drives, flash memory cards, ... could be used. Computing system 600 could perform steps of the network nodes and routers according to the described embodiments.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for configuring a first router (150, 302, 450, 541) over a secure session (222) between the first router and a network node (120, 315, 421); the method further comprising the following steps:
- determining (212) a configuration description (213) for configuring the first router;
- creating (214) a certificate (215) comprising the configuration description;
- providing (216) the certificate to the network node;
- by the network node, establishing (221) or re-establishing the secure session (218, 318, 418) with the first router using the certificate (215); and
- by the first router, extracting (219) the configuration description (213) from the certificate, and configuring (220) the first router according to the configuration description.

2. The method according to claim 1 wherein the secure session is a secure routing session.

3. The method according to claim 1 or 2 wherein the certificate comprises a signature and a signed portion; and the creating comprises signing at least the configuration description and a key associated to the network node thereby obtaining the signed portion and the signature.

4. The method according to any one of the preceding claims wherein the configuration description comprises control plane settings for the first router.

5. The method according to any one of any one of the preceding claims wherein the configuration description comprises data plane settings for the first router.

6. The method according to any one of the preceding claims wherein the creating (214) the certificate comprises encrypting at least a part of the configuration description and the extracting (219) the configuration description comprises decrypting at least the part of the configuration description.

7. The method according to any one of the preceding claims wherein the creating the certificate comprises authenticating the configuration description and the extracting the configuration description comprises validating its authenticity.

8. The method according to any one of the preceding claims wherein the determining, creating and providing is performed by a certificate authority (153) trusted by the first router.

9. The method according to any one of the preceding claims further comprising:
- determining a second configuration description for configuring the network node;
- including the second configuration description in a second certificate;
- providing the second certificate to the first router;
- upon the establishing or re-establishing the secure session, providing the second certificate to the network node; and
- by the network node, extracting the second configuration description from the second certificate, and configuring the network node according to the second configuration description.

10. The method according to any one of the preceding claims wherein the first router belongs to a first autonomous system (140, 440, 540), first AS, and the network node belongs to a second autonomous system (110, 410, 520), second AS.

11. The method according to any one of the preceding claims wherein the first router (450) provides a remote triggered black hole, RTBH, service; and wherein the method further comprises:
- by the network node, receiving a notification of an attack against target nodes by packets under control of the first router;
- by the network node, requesting the first router, over the secure session, to block traffic to the target nodes; and
- by the first router, triggering the blocking of the traffic.

12. The method according to any one of the preceding claims wherein the network node is a second router.

13. The method according to claim 10 and 12 wherein the first AS is an Internet provider AS and the second AS is a customer AS; and wherein the first and second routers are edge routers connecting the customer AS to the Internet provider AS; and wherein the configuration description is determined by the Internet provider upon request of the customer.

14. A router configured to:
- upon request of a network node, establish (221) or re-establish a secure session (218, 318, 418) with the network node using a certificate (215) received from the network node; the certificate further comprising a configuration description for configuring the router; and
- extract (219) a configuration description (213) from the certificate, and configure (220) the router according to the configuration description.

15. A system comprising the router (150, 302, 450, 541) according to claim 14, a network node (120, 315, 421), and a certificate issuing entity trusted by the router; wherein the certificate issuing entity is configured to:
- obtain the configuration description (213) for configuring the router;
- create (214) the certificate (215) comprising the configuration description; and
- provide (216) the certificate to the network node;
and wherein the network node is configured to:
- establish (221) or re-establish the secure session with the first router using the certificate (215).
